# EUROPÄISCHE PATENTANMELDUNG

(11) **EP 3 163 085 A1**
(43) Veröffentlichungstag der Anmeldung: **03.05.2017**
(21) Anmeldenummer: 15191597.2
(22) Anmeldetag: 27.10.2015
(51) Int. Cl.: F04D 13/06, H02K 7/14

(54) **SYSTEM AUS ELEKTROMOTOR UND ARBEITSMASCHINE**

(71) Anmelder: Kolektor Micro-Motor d.o.o., 5280 Idrija (SI)
(72) Erfinder: Johannhörster, Bernd, 79400 Kandern (DE)
(74) Vertreter: Grättinger Möhring von Poschinger Patentanwälte Partnerschaft

(57) **Zusammenfassung**

Es ist ein System aus einem Elektromotor und einer Arbeitsmaschine vorgesehen, bei dem der Elektromotor ein Motorgehäuse (1, 2) mit einem Stator (5) und einem innerhalb des Stators angeordneten Rotor (5) zum Antrieb der Arbeitsmaschine und die Arbeitsmaschine ein Maschinengehäuse (10) und eine vom Rotor (6) des Elektromotors angetriebene Eingangswelle (11) umfasst. Motorgehäuse (1, 2) und Maschinengehäuse (10) sind miteinander verbunden. Die Eingangswelle (11) ist im Maschinengehäuse (10) gelagert und ohne Lagerung am Elektromotor vorgesehen, sodass ein freies Ende der Eingangswelle (11) aus dem Maschinengehäuse (10) hervorsteht. Der Rotor (6) ist auf dem freien Ende der Eingangswelle (11) gelagert und ohne Lagerung am Elektromotor vorgesehen ist.

## Beschreibung

Die vorliegende Erfindung betrifft ein System mit einem Elektromotor und einer Arbeitsmaschine, die von dem Elektromotor angetrieben ist, wobei als Elektromotor insbesondere ein bürstenloser Elektromotor und als Arbeitsmaschine insbesondere eine Pumpe zum Einsatz kommt.

Aus dem Stand der Technik sind unterschiedliche Anordnungen von Antriebsmotoren in Form von Elektromotoren und mit diesen gekoppelte Arbeitsmaschinen, u. a. in Form von Pumpen, Gebläsen und auch Getrieben, bekannt. Die DE 44 44 644 A1 zeigt z. B. ein Motorpumpenaggregat. Ein Elektromotor in Form eines Gleichstrom-Kommutatormotors weist ein Gehäuse auf, in dem eine Ankerwelle mit einem Anker und einem Kollektor drehend gelagert ist und an dessen Innenseite Dauermagnete befestigt sind. Das Motorgehäuse ist an eine Flanschfläche eines Gehäuses der Pumpe angeflanscht, so dass mittels der Ankerwelle die Pumpenkolben der Pumpe angetrieben werden können. Hierfür ragt die Ankerwelle mittels einer Verlängerung durch eine Bohrung in der Flanschfläche in das Pumpengehäuse hinein, wobei die Verlängerung angekoppelt oder einstückig mit der Ankerwelle sein kann. Auf der Verlängerung der Ankerwelle ist innerhalb des Pumpengehäuses ein Exzenter vorgesehen, der über Nadellager an den Pumpenkolben anliegt. Dieses Motorpumpenaggregat stellt im Wesentlichen eine serielle Anordnung einer Motoreinheit und einer davon angetriebenen Arbeitseinheit entlang der Längsachse der antreibenden Welle dar. Lediglich die Antriebswelle des Elektromotors ragt in Längsrichtung in den Bereich der Pumpeneinheit hinein. Eine solche Anordnung baut sehr lang, braucht somit viel Platz und erfordert eine aufwendige Ankopplung der drehenden Bauelemente, um eine Überbestimmung des Systems zu vermeiden.

Im Gegensatz dazu wird in der DE 10015139 A1 ein Motorpumpenaggregat beschrieben, bei dem Elektromotor und Pumpe von einem gemeinsamen Gehäuse umschlossen sind. Das Gehäuse weist Zu- und Ablauf für das zu pumpende Medium auf. Ein Stator des Elektromotors ist an einer Innenwand des Gehäuses angeordnet. Ein Rotor des Elektromotors ist topfförmig ausgebildet, so dass er eine Ritzelwelle mit einer Innenzahnradpumpe umgibt und mit dieser in Drehverbindung steht. Die Bauelemente sind innerhalb des Gehäuses in Öl gelagert. Bei einem solchen Aufbau bilden Motor und Pumpe im Wesentlichen eine Einheit, die nur schwer gewartet werden kann und keine Flexibilität bei der Wahl von Elektromotor und Arbeitspumpe bietet. Auch hier liegt ein Kupplungssystem vor, das zu Spannungen, mechanischen Verlusten und akustischen Problemen führen kann.

Eine ähnliche Anordnung ist auch in der EP 0323834 A2 gezeigt. Ein Pumpengehäuse mit den Bauelementen einer Pumpe und ein Motorgehäuse mit den Bauelementen eines Elektromotors sind zwischen zwei Flanschdeckeln eingeschlossen, welche Zu- und Ablauf der Pumpe umfassen. Eine Antriebsspindel der Pumpe ist an einer Seite an einem Flanschdeckel und an der anderen Seite am Gehäuse gelagert. Ein Rotor des Elektromotors ist in Form einer Glocke ausgebildet, in der das Pumpengehäuse teilweise aufgenommen ist. An dem Ende der Antriebsspindel, die am Flanschdeckel gelagert ist, ist der Rotor mit der Spindel gekoppelt und treibt diese rotierend an. Auch diese Anordnung weist einen komplizierten Aufbau und ein komplexes Kupplungssystem auf und lässt keinen Spielraum zur Ausgestaltung der Motor-Pumpen-Kombination.

Es ist eine Aufgabe der vorliegenden Erfindung ein System aus Elektromotor und Antriebsmaschine bereitzustellen, das einen flexiblen und platzsparenden Aufbau aufweist, die Wartung des Systems erleichtert, einen Verschleiss von Bauteilen reduziert ,weniger Bauteile benötigt, Geräuschentwicklung und Kosten verringert, einen verbesserten Wirkungsgrad zeigt und zuverlässig betrieben werden kann.

Diese Aufgabe wird von der Erfindung durch ein System aus einem Elektromotor und einer Arbeitsmaschine nach Anspruch 1 gelöst. Vorteilhafte Ausgestaltungen und Ausführungsbeispiele sind in den abhängigen Ansprüchen beschrieben.

Nach der vorliegenden Erfindung wird ein System aus einem Elektromotor und einer Arbeitsmaschine vorgesehen, bei dem der Elektromotor ein Motorgehäuse mit einem Stator und einem innerhalb diesem angeordneten Rotor und die Arbeitsmaschine ein Maschinengehäuse und eine Eingangswelle umfasst, die von dem Rotor angetrieben wird. Hierfür sind das Motorgehäuse und das Maschinengehäuse derart miteinander verbunden, dass die Eingangswelle in das Motorgehäuse hinein ragt. Besonders eignen sich für ein System nach der Erfindung ein Elektromotor in Form eines bürstenlosen DC-Motors oder eines Reluktanzmotors und eine Arbeitsmaschine in Form einer Pumpe, eines Gebläses oder auch eines Getriebes.

Erfindungsgemäss ist die Eingangswelle der Arbeitsmaschine im Maschinengehäuse gelagert und ohne Lagerung am Elektromotor vorgesehen. Die Eingangswelle soll unabhängig vom Elektromotor und insbesondere unabhängig vom Motorgehäuse des Elektromotors rotierend gelagert sein. Ein freies Ende der Eingangswelle steht aus dem Maschinengehäuse hervor und kann somit in das Motorgehäuse hinein ragen. Der Rotor des Elektromotors ist auf dem freien Ende der Eingangswelle gelagert und ebenfalls ohne Lagerung am Elektromotor vorgesehen. Der Rotor weist somit keinerlei mechanischen Kontakt zu den übrigen Bauteilen des Elektromotors auf. Er wird allein am freien Ende der Eingangswelle der Arbeitsmaschine gehalten.

Bei dem Elektromotor-Arbeitsmaschine-System nach der Erfindung ermöglicht das Fehlen von Lagern für den Rotor im Elektromotor eine grosse Gestaltungsfreiheit in der Motorarchitektur und eine Reduzierung der erforderlichen Bauteile. Ferner wird eine Überbestimmung der Lagerung von Rotor und Eingangswelle vermieden, so dass sich Verschleiss und Wartungsarbeiten im Gesamtsystem verringern.

Bei dem System nach der Erfindung ist der Rotor drehfest auf dem freien Ende der Eingangswelle befestigt. Die Anordnung entspricht einer Zapflagerung des Rotors auf der Eingangswelle. Der Rotor kann z. B. durch Formschluss oder Reibschluss festsitzend am Ende der Eingangswelle befestigt werden. Es ist auch möglich, den Rotor stoffschlüssig mit dem Material der Eingangswelle zu verbinden. Wichtig ist, dass der Rotor starr auf der Eingangswelle angeordnet ist und nicht relativ zu dieser verdreht werden kann. Dabei ist weiter zu beachten, dass der Rotor zentriert zur Längsachse der Eingangswelle angeordnet wird. Je nach Ausgestaltung von Elektromotor und Arbeitsmaschine des Systems und dessen Verwendung kann es vorteilhaft sein, dass der Rotor axial zur Längsachse der Eingangswelle beweglich aber feststellbar vorgesehen ist, so dass er in axialer Richtung auf die Eingangswelle aufgeschoben, arretiert und nach Lösen der Arretierung wieder abnehmbar ist. Dies kann die Wartung des Systems und dessen Anpassung erleichtern. Wie vorher erwähnt, kann der Rotor aber auch unlösbar mit der Eingangswelle verbunden werden, so dass diese nach dem Zusammenfügen als einstückig betrachtet werden können.

In einer Ausführungsform des Elektromotor-Arbeitsmaschine-System ist das Maschinengehäuse zumindest teilweise innerhalb des Motorgehäuses vorgesehen. Dabei sind Maschinengehäuse und Motorgehäuse so angeordnet, dass eine Längsachse der Eingangswelle einer zentralen Achse des Stators entspricht. Je nach Ausgestaltung der Arbeitsmaschine kann diese vollständig innerhalb des Motorgehäuses untergebracht werden oder es kann nur ein Bereich, aus dem die Eingangswelle ragt, innerhalb des Motorgehäuses angeordnet werden. Vorteilhaft ist das Maschinengehäuse am Motorgehäuse an nur einer Seite des Motorgehäuses befestigt, beispielsweise an einer Seite, an der das Maschinengehäuse durch das Motorgehäuse hindurchragt. Die übrigen Seiten des Gehäusevolumens des Motorgehäuses bleiben somit frei zur Ausgestaltung des Elektromotors und müssen nicht an Bauteile der Arbeitsmaschine angepasst werden.

In einer Variante wird das Motorgehäuse von einem Gehäusetopf und einem Gehäuseflansch gebildet und ist somit zweiteilig vorgesehen. Gehäusetopf und Gehäuseflansch können durch eine lösbare Verbindung miteinander verbunden werden, beispielsweise durch Verschraubungen. Der Gehäusetopf weist einen Boden und eine davon abragende Umfangswand auf. Vorzugsweise ist die Umfangswand kreisförmig, insbesondere zylindrisch. Der Gehäuseflansch kann zumindest annähernd flach vorgesehen sein und deckt den offenen Bereich des Gehäusetopfes, der dem Boden gegenüberliegt, ab. Somit bildet das Motorgehäuse ein geschlossenes Volumen. Vorteilhaft kann der Stator des Elektromotors an der Innenseite der Umfangswand vorgesehen sein, so dass der Stator das Zentrum des Gehäusetopfes kreisringförmig umschliesst. Zur Ausbildung des Stators werden Statorwicklungen in bekannter Weise an der Innenwand des Gehäusetopfs angebracht.

Der Gehäuseflansch kann einen zentralen Durchgang aufweisen, der zur Aufnahme, bzw. Durchführung, des Maschinengehäuses vorgesehen ist. Hierfür ist der Durchgang derart auf das Maschinengehäuse abgestimmt, dass die Eingangswelle relativ zum Stator zentriert angeordnet werden kann. Der Gehäuseflansch kann hier eine Positionierhilfe, wie z. B. eine Markierung oder eine Führung, zur Ausrichtung des Maschinengehäuses relativ zum Motorgehäuse aufweisen. Alternativ kann der Gehäuseflansch auch eine Befestigung für das Maschinengehäuse an der Innenseite des Gehäuseflanschs aufweisen und mit Durchlässen für Zugänge zum Maschinengehäuse versehen sein.

In einer bevorzugten Ausführungsform ist der Rotor topfartig ausgebildet und weist eine Umfangswand auf, die von einer flachen, kreisförmigen Basis absteht. Die Basis weist eine zentrale Befestigungseinrichtung auf, mit der der Rotor auf dem freien Ende der Eingangswelle befestigt werden kann. Der Rotor wird derart auf der Eingangswelle angeordnet, dass die Basis radial zur Längsachse der Eingangswelle verläuft und die Umfangswand das Maschinengehäuse zumindest teilweise umgibt. Vorzugsweise wird von der Rotorumfangswand der überwiegende Teil des Maschinengehäuses, der innerhalb des Motorgehäuses liegt, überragt. Der Durchmesser des Rotors kann auf die Abmessungen des Maschinengehäuses abgestimmt werden. Die Umfangswand des Rotors trägt auf ihrer Aussenseite Magnetkörper, die mit dem Stator des Elektromotors zusammenwirken, wenn das Elektromotor-Arbeitsmaschine-System zusammengesetzt ist. Wie von Elektromotoren bekannt, sind die Umfangswand des Rotors und des Gehäusetopfes vorzugsweise zylindrisch, so dass sie in zusammengebautem Zustand des Systems konzentrisch zur Längsachse der Eingangswelle angeordnet sind.

In einem zusammengesetzten und einsatzbereiten Zustand des Elektromotor-Arbeitsmaschine-Systems umgibt die Umfangswand des Gehäusetopfs den Rotor und zumindest teilweise das Maschinengehäuse. Dabei werden der Rotor und das Maschinengehäuse vom Gehäusetopf berührungslos umgeben, Der Boden des Gehäusetopfs schliesst die Frontseite des Maschinengehäuses ab und die Umfangswand des Gehäusetopfs umgibt die seitlichen Flächen des Maschinengehäuses. Sobald der Gehäuseflansch mittels einer vorzugsweise lösbaren Befestigung am Maschinengehäuse und der Rotor an der Eingangswelle angebracht ist, kann der Gehäusetopf des Motorgehäuses am Gehäuseflansch befestigt werden, so dass das Motorgehäuse vollständig geschlossen ist.

Durch die topfförmige Ausgestaltung von Rotor und Gehäusetopf des Motorgehäuses kann die Anzahl an erforderlichen Bauteilen im Gesamtsystem von Elektromotor und Arbeitsmaschine reduziert werden. Der Raum im Inneren von Rotor und Motorgehäuse kann für die Konstruktion des Systems genutzt werden, dabei können Elektromotor und Arbeitsmaschine ineinander verschachtelt angeordnet werden, so dass die Gesamtlänge des Systems im Vergleich zu herkömmlichen Anordnungen verringert wird. Eine kurze Baulänge, die u. a. durch eine wegfallende elastische Kupplung und eine Reduzierung der Lager im Gesamtsystem ermöglicht ist, führt auch zu einer erhöhten Energieeffizienz und geringerer Vibration.

Das Maschinengehäuse und das Motorgehäuse sind vorteilhaft durch eine lösbare Verbindung miteinander verbunden. In der beschriebenen Ausführungsform wird das Maschinengehäuse ausschliesslich am Gehäuseflansch des Motorgehäuses gehalten. Der Gehäusetopf des Motorgehäuses kommt mit der Arbeitsmaschine nicht in mechanischen Kontakt. Durch ein einfaches Abnehmen des Gehäusetopfs vom Gehäuseflansch und des Rotors von der Eingangswelle ist das Maschinengehäuse überwiegend frei zugänglich, da lediglich der flache Gehäuseflansch am Maschinengehäuse verbleibt. Vorzugsweise ist auch dieser mit einer einfach zu lösenden Befestigung vom Maschinengehäuse abnehmbar angebracht.

In einer Ausführungsform des Systems nach der Erfindung ist eine Positionserkennung zur Erkennung der Position des Rotors vorgesehen, die einen Positionsgeber am freien Ende der Eingangswelle und einen Encoder am Motorgehäuse umfasst. Diese Anordnung hat den Vorteil, dass damit zusätzlich zur Position des Rotors direkt auch die Position der Eingangswelle überwacht werden kann. Gemäss einer Variante ist der Positionsgeber am Frontende der Eingangswelle und der Encoder im Zentrum des Gehäusetopfs des Motorgehäuses, vorteilhaft im Boden des Motorgehäuses, vorgesehen. Die Positionsüberwachung erfolgt vorzugsweise durch kontaktlose optische Messverfahren. Vorteilhaft kann der Boden des Motorgehäuses im Zentrum einen herausnehmbaren Einsatz aufweisen, in dem der Encoder angeordnet werden kann. Somit kann der Encodereinsatz vom Motorgehäuse abgenommen werden, ohne den Gehäusetopf vom Gehäuseflansch trennen zu müssen. Alternativ kann auch das Motorgehäuse über dem Encoder einen abnehmbaren Deckel aufweisen, so dass durch Abnehmen des Deckels der Encoder zugänglich ist, ohne ihn von seiner Position relativ zum Positionsgeber entfernen zu müssen.

Ein System nach der vorliegenden Erfindung ist vorzugsweise modular aufgebaut und umfasst ein Elektromotor-Modul, das an mehrere unterschiedliche Arbeitsmaschinen-Module koppelbar ist. Hierfür kann das Elektromotor-Modul mehrere unterschiedliche Gehäuseflansche aufweisen, die jeweils an ein Arbeitsmaschinen-Modul angepasst sind, beispielsweise durch unterschiedliche Durchgänge für unterschiedliche Maschinengehäuse der Arbeitsmaschinen-Module. Weiter kann das Elektromotor-Modul Rotoren mit unterschiedlichen Befestigungseinrichtungen zur Befestigung an den unterschiedlichen Eingangswellen der unterschiedlichen Arbeitsmaschinen-Module umfassen oder die Befestigungseinrichtung des Rotors ist zur Befestigung auf Eingangswellen mit unterschiedlichen Durchmessern geeignet. Somit ist der Rotor des Elektromotors des Elektromotor-Moduls auf einem freien Ende unterschiedlicher Eingangswellen von unterschiedlichen Arbeitsmaschinen-Modulen lagerbar. Das Elektromotor-Modul kann ohne grosse bauliche Umgestaltung und Änderung der Funktionsweise für unterschiedliche Arbeitsmaschinen verwendet werden.

In einer bevorzugten Ausführungsform bildet das System nach der vorliegenden Erfindung ein Pumpenaggregat. Die Arbeitsmaschine ist somit als Pumpe ausgebildet. Der Elektromotor ist vorzugsweise als bürstenloser DC-Motor oder als Reluktanzmotor ausgebildet. Fluidanschlüsse der Pumpe werden am Maschinengehäuse, das in dieser Ausführungsform durch ein Pumpengehäuse gegeben ist, vorgesehen, so dass hierfür am Motorgehäuse keine besonderen Vorkehrungen getroffen werden müssen. Der Elektromotor und die Arbeitsmaschine des Systems können weitgehend unabhängig voneinander gewartet werden, da die einzelnen Bauteile ihrem jeweiligen Gehäuse zugeordnet sind und die Gehäuse in einfacher Weise voneinander getrennt werden können. Fluidverbindungen und Dichtungen der Pumpe können somit unabhängig vom Antriebsmotor ausgelegt sein. Umgekehrt sind am Elektromotor keine besonderen Anpassungen an die Pumpe erforderliche, abgesehen von der Befestigungseinrichtung zum Anbringen des Rotors auf der Eingangswelle. Beispielsweise kann als Befestigungseinrichtung eine Bohrung oder ein Flansch am Magnetträger dienen, der an die Eingangswelle der Pumpe angepasst werden kann.

Die Erfindung wurde an Hand verschiedener Ausführungsformen beispielhaft dargestellt. Die einzelnen technischen Merkmale einer Ausführungsform kann durchaus auch in Kombination mit einer anderen Ausführungsform mit den dargelegten Vorteilen verwendet werden. Die Beschreibung der erfindungsgemässen technischen Merkmale ist daher nicht auf die jeweilige Ausführungsform beschränkt.

Vorteilhafte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1: eine schematische Darstellung eines Systems aus einem Elektromotor und einer Arbeitsmaschine nach der Erfindung in einem Längsschnitt,
- Fig. 2: eine Explosionsdarstellung eines Ausführungsbeispiels eines Systems aus einem bürstenlosen Elektromotor und einer Arbeitsmaschine nach der Erfindung in einem Längsschnitt und
- Fig. 3: eine zusammengesetzte Darstellung des Systems aus Figur 2 in einem Längsschnitt.

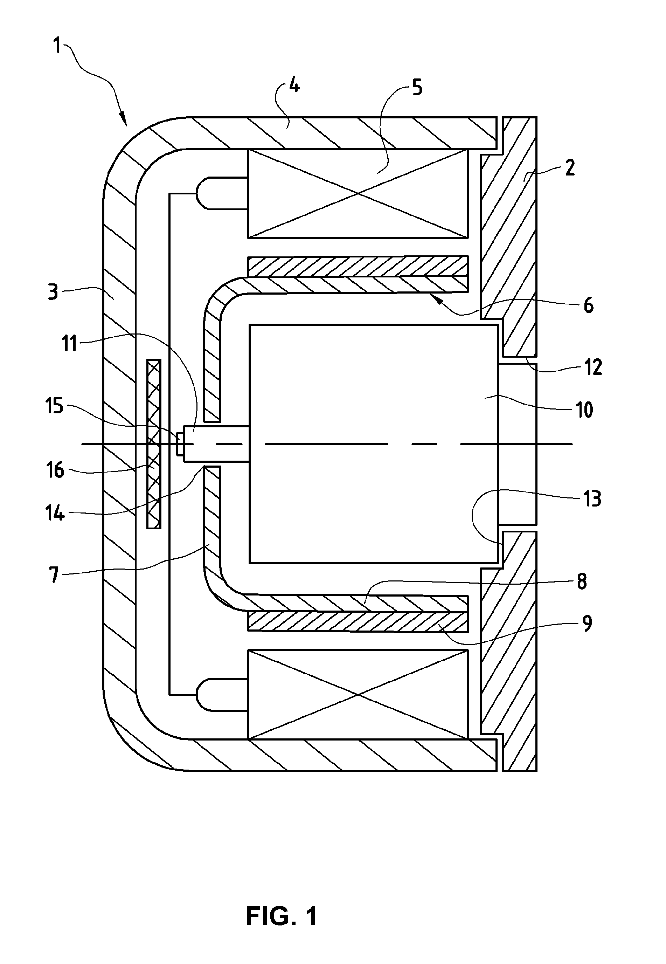

Figur 1 zeigt eine schematische Darstellung eines Systems aus einem Elektromotor und einer Arbeitsmaschine in einem betriebsbereiten, zusammengesetzten Zustand. Um das Verständnis der Erfindung zu erleichtern, sind nur die für die Erfindung relevanten Bauteile des Elektromotors und der Arbeitsmaschine gezeigt, wobei die Bauteile unterschiedlich ausgestaltet sein können, beispielsweise in Form, Grösse, Abmessungen, etc.

Der Elektromotor weist ein Motorgehäuse auf, das in dieser Ausführungsform aus einem topf- oder becherartig geformten Gehäusetopf 1 und einem Gehäuseflansch 2 besteht. Der Gehäusetopf 1 weist einen Boden 3 und eine Umfangswand 4, die im Wesentlichen senkrecht vom Boden 3 abragt, auf. Der Boden bildet vorzugsweise eine kreisrunde Fläche und die Umfangswand ist zylindrisch ausgebildet. Der Gehäuseflansch 2 kann durch Befestigungsmittel, die vorzugsweise lösbar ausgebildet sind, am Rand der Umfangswand 4 befestigt werden, so dass Gehäusetopf 1 und Gehäuseflansch 2 gemeinsam das Motorgehäuse bilden und dessen Innenraum definieren.

Weiter weist der Elektromotor einen Stator 5 auf, der durch Statorwicklungen entlang der Innenseite der Umfangswand 4 in herkömmlicher Weise realisiert wird. Der Elektromotor umfasst ferner einen Rotor 6, der topfförmig mit einer Basis 7 und einer zylindrischen Umfangswand 8 ausgestaltet ist. Auf der Aussenseite der Umfangswand 8 sind ringsum Magnetelemente 9 angebracht, die in bekannter Art eines bürstenlosen Elektromotors mit dem Stator 5 zusammenwirken und den Rotor 6 drehend antreiben. Bei dem Elektromotor der Erfindung ist der Rotor innerhalb des Stators vorgesehen.

Die Arbeitsmaschine umfasst ein Maschinengehäuse 10 und eine Eingangswelle 11, die mit einem freien Ende aus dem Maschinengehäuse 10 ragt. Die Arbeitsmaschine weist ein vollständiges Lagersystem für die Eingangswelle 11 auf, das innerhalb des Maschinengehäuses 10 vorgesehen ist. Als Lagersystem für die Eingangswelle 11 genügen herkömmliche Standard-Lager der Arbeitsmaschine. Bei der Ausgestaltung des Lagersystems ist zu beachten, dass zum einen der Funktion der Welle innerhalb der Maschine Rechnung getragen wird und zum anderen die Führung der Momentenübertragung realisiert werden kann. Ferner weist die Arbeitsmaschine weitere Bauelemente auf, die für die Funktion einer bestimmten Arbeitsmaschine spezifisch sind, für die Funktion der Erfindung aber nicht bestimmend sind und daher nicht weiter erläutert werden müssen.

Der Gehäuseflansch 2 weist eine Durchführung 12 auf, die das Maschinengehäuse 10 aufnimmt. Die Durchführung 12 ist auf die Aussenform des Maschinengehäuses 10 abgestimmt, so dass das Maschinengehäuse 10 die Durchführung 12 nach aussen abschliesst und das Motorgehäuse vollständig umschlossen ist. Dabei bleibt eine Seite des Maschinengehäuses 10 von ausserhalb des Systems zugänglich. Auf der Innenseite weist der Gehäuseflansch 2 am Rand der Durchführung 12 eine Führung in Form einer umlaufenden Einkerbung 13 auf. Das Maschinengehäuse 10 kann in die Einkerbung 13 eingesetzt werden, wodurch die Position der Eingangswelle 11 relativ zum Motorgehäuse ausgerichtet wird.

Die Arbeitsmaschine kann z. B. eine hydraulische Pumpe sein. In diesem Fall kann die von aussen zugängliche Seite des Maschinengehäuses 10 hydraulische Zugangs- und Abgangsanschlüsse der Pumpe tragen. Eine Durchführung des Hydraulikmediums durch den Gehäusetopf 1 oder den Gehäuseflansch 2 des Motorgehäuses ist nicht erforderlich.

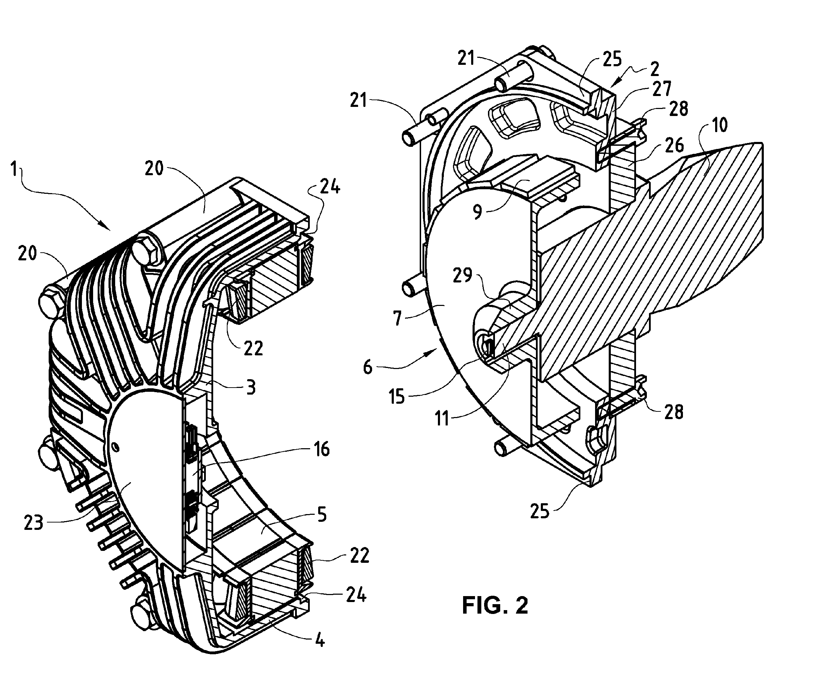

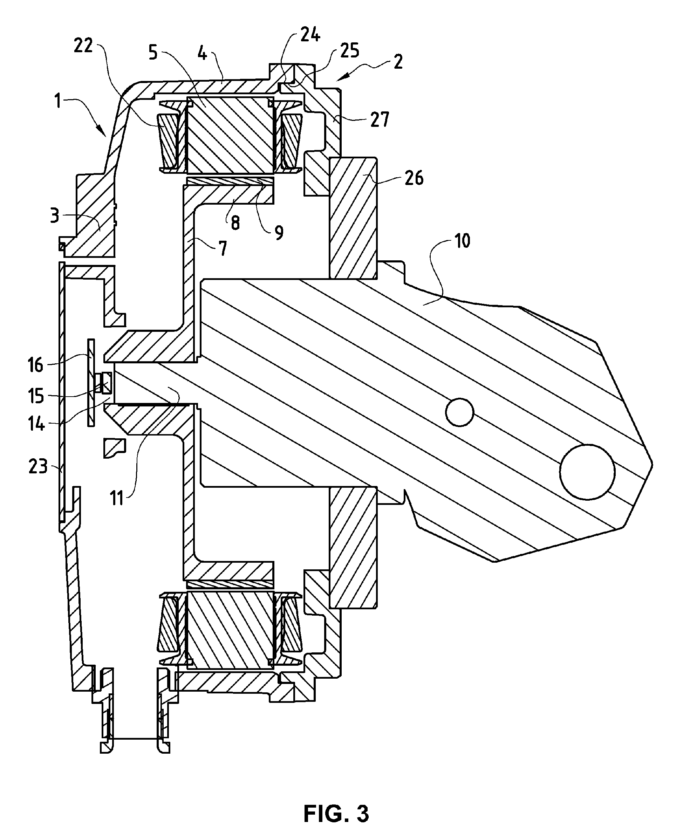

In der dargestellten Ausführungsform ist die Arbeitsmaschine nahezu vollständig innerhalb des Motorgehäuses aufgenommen. Es ist aber auch möglich, dass ein Teil, auch ein überwiegender Teil, der Arbeitsmaschine ausserhalb des Motorgehäuses angeordnet ist, wie z. B. in der Ausführungsform der Figuren 2 und 3 gezeigt ist.

Der Rotor 6 weist in seiner Basis 7 im Zentrum einen Durchgang 14 mit einem Befestigungsmittel zur Befestigung des Rotors 6 auf dem freien Ende der Eingangswelle 11 auf. Der Rotor 6 kann mit dem Befestigungsmittel drehfest nach Art einer Zapflagerung am Ende der Eingangswelle 11 befestigt werden, damit eine starre Verbindung zwischen Rotor 6 und Eingangswelle 11 für den Betrieb des Systems besteht. Der Durchgang 14, die Befestigungsmittel oder die Eingangswelle 11 selbst können Führungsmittel aufweisen, die sicherstellen, dass die Umfangswand 8 des Rotors 6 konzentrisch um die Eingangswelle 11 ausgerichtet wird. Beispielsweise kann eine formschlüssige Kontur an Durchgang 14 und Eingangswelle 11 vorgesehen werden. Es ist aber auch möglich, den Rotor mittels äusserer Hilfsmittel konzentrisch auf der Eingangswelle 11 zu befestigen.

Gemäss der Erfindung ist die Eingangswelle 11 im Maschinengehäuse 10 gelagert, ohne dass eine Lagerung am Elektromotor vorgesehen ist. Der Rotor ist wiederum auf dem freien Ende der Eingangswelle gelagert, ebenfalls ohne dass eine Lagerung am Elektromotor vorgesehen ist. Die Rotation des Rotors 6 wird vollständig von dem Lagersystem der Arbeitsmaschine für die Eingangswelle 11 getragen. Weder sind zusätzliche Lager zur Abstützung des Rotors erforderlich noch sind zusätzliche Lager zur Stabilisierung der Eingangswelle am Motorgehäuse notwendig. Dadurch werden u. a. mechanische Verluste und akustische Probleme reduziert. Die Arbeitsmaschine kann im freien Raum innerhalb des Motorgehäuses, insbesondere innerhalb des Rotors 6 aufgenommen werden. Somit wird die Gesamtlänge des Systems aus Elektromotor und Arbeitsmaschine kurz gehalten.

Der Gehäusetopf 1 wird über den Rotor 6 und die darin liegende Arbeitsmaschine gestülpt und am Gehäuseflansch 2 befestigt. Am Gehäuseflansch 2 kann hierfür eine Führung vorgesehen sein, um den Gehäusetopf 1 mit dem Stator 5 relativ zu Rotor 6 und Eingangswelle 11 auszurichten. Die Führung kann z. B. wiederum als Einkerbung realisiert sein. Zur Sicherung des Gehäusetopfs 1 am Gehäuseflansch 2 sind lösbare Befestigungsmittel (nicht dargestellt) vorgesehen.

Weiter weist das System eine Positionserkennung zur Bestimmung der Position des Rotors 6 auf, wie es bei Elektromotoren üblich ist. Bei dem System nach der vorliegenden Erfindung wird hierfür ein Positionsgeber 15 am freien Ende der Eingangswelle 11 und ein Encoder 16 am Motorgehäuse vorgesehen. Der Encoder 16 ist zentriert am Boden 3 des Gehäusetopfs 1 angeordnet, so dass er der Eingangswelle 11 gegenüberliegt. Der Positionsgeber 15 ist vorteilhaft an der Frontseite der Eingangswelle 11 angebracht, so dass er dem Encoder 16 zugewandt ist. Bei einer Rotation der Eingangswelle 11 durch den Elektromotor, wird somit die Position des Rotors 6 durch die Drehposition der Eingangswelle 11 registriert. Es können somit gleichzeitig der Rotor 6 und auch die Eingangswelle 11 überwacht werden.

In den Figuren 2 und 3 ist eine Ausführungsform eines Systems aus Elektromotor und Arbeitsmaschine nach der vorliegenden Erfindung gezeigt, das als Pumpenaggregat mit einem bürstenlosen DC-Motor ausgestaltet ist. Gleichwirkende Bauteile werden mit den Bezugszeichen aus Figur 1 nummeriert. Die Arbeitsmaschine ist hier als Pumpe vorgesehen, die ein Arbeitsmaschinen-Modul des Systems bildet, bei dem unterschiedliche Arbeitsmaschinen-Module an ein bestehendes Elektromotor-Modul angeschlossen werden können. Die Pumpe ist daher als Moduleinheit gezeigt, von der lediglich die Aussenformgebung dargestellt wird. Das heisst Maschinengehäuse 10 und Eingangswelle 11 sind als Einheit gezeichnet.

In Figur 2 ist das System mit einem abgenommenem Gehäusetopf 1 gezeigt. Der Gehäusetopf 1 bildet eine topfförmige Schale mit einem Boden 3 und einer Umfangswand 4, deren Innenseite zylindrisch ausgebildet ist. Auf der Aussenseite weist der Gehäusetopf 1 radial verlaufende Verstärkungsrippen auf. Weiter sind auf der Aussenseite ringsum mehrere Bohrungen 20 vorgesehen, die mit mehreren, am Gehäuseflansch 2 vorgesehenen Schraubelementen 21 zusammenwirken. Auf der Innenseite der Umfangswand 4 sind ringsum Wicklungen 22 vorgesehen, die den Stator 5 des Elektromotors bilden. Im Zentrum des Bodens 3 ist eine Einsatzplatte 23 vorgesehen, die vom Boden 3 abgenommen werden kann. Zentriert auf der Einsatzplatte 23 ist eine Encodereinheit 16 angebracht, so dass sie gemeinsam mit der Einsatzplatte 23 vom Gehäusetopf 1 entfernt werden kann. Somit kann einerseits der Encoder gewartet werden, andererseits wird ein Zugang in das Innere des Motorgehäuses ermöglicht. Am Rand der Umfangswand 4 ist eine umlaufende Stufe 24 vorgesehen, die mit einer komplementären Einkerbung 25 am Gehäuseflansch 2 zur Positionierung von Gehäusetopf 1 und Gehäuseflansch 2 zusammenwirkt.

Der Gehäuseflansch 2 wird in dieser Variante durch einen inneren Flanschring 26 und einen äusseren Flanschring 27 gebildet. Der innere Flanschring 26 sitzt fest auf dem Maschinengehäuse 10 auf. Grundsätzlich könnte der innere Flanschring 26 auch Bestandteil des Maschinengehäuses 10 sein. Der äussere Flanschring 27 ist durch Schraubmittel 28 lösbar am inneren Flanschring befestigt. Am äusseren Rand weist der äussere Flanschring 27 die rings umlaufende Einkerbung 25 auf, die mit der Stufe 24 am Gehäusetopf 1 zusammenwirkt, um den Gehäusetopf 1 relativ zum Maschinengehäuse 10 zur positionieren. Die Stufe 24 des Gehäusetopfs 1 wird derart in der Einkerbung 25 platziert, dass die Bohrungen 20 den Schraubelementen 21 am äusseren Flanschring 27 gegenüber liegen. Durch Einschrauben der Schraubelemente 21 in die Bohrungen 20 ist der Gehäusetopf 1 zentriert zum Gehäuseflansch 2 befestigt. Gleichzeitig ist die Eingangswelle 11 mit ihrer Längsachse konzentrisch zur Achse des Stators 5 ausgerichtet.

Die Eingangswelle 11 steht mit einem freien Ende aus dem Maschinengehäuse 10 hervor. Auf dem freien Ende ist der Rotor 6 angeordnet. Hierfür weist der Rotor 6 im Boden 7 mittig einen zylindrischen Fortsatz 29 mit einer axialen Bohrung auf. Der Fortsatz 29 ragt vom Boden 7 axial in der entgegengesetzten Richtung ab, wie die Umfangswand 8, die auf ihrer Aussenseite die Magnetelemente 9 trägt. Der Rotor 6 wird mit der axialen Bohrung des Fortsatzes 29 auf das freie Ende der Eingangswelle 11 aufgesteckt. Dabei wird der Rotor soweit aufgeschoben, dass die Umfangswand 8 axial über das Maschinengehäuse 10 hervorsteht und somit das Maschinengehäuse 10 im Innenraum des Rotors 6 zu liegen kommt. In dieser Position wird der Rotor 6 befestigt, so dass er starr mit der Eingangswelle 11 verbunden ist. Der Rotor wird beispielsweise mit einer Bohrung auf die Eingangswelle aufgesteckt oder mit einer Flanschverbindung befestigt, wie schon vorher erwähnt. An der Frontseite der Eingangswelle 11 ist der Positionsgeber 15 angebracht.

In Figur 3 ist das System in zusammengesetztem und betriebsbereitem Zustand gezeigt. Der Gehäusetopf 1 ist durch die Schraubelemente 21 auf dem Gehäuseflansch 2 positioniert und mit diesem verbunden. Aus Figur 3 geht klar hervor, dass im Betriebszustand des Systems der Gehäusetopf 1, der Stator 5 und der Rotor 6 den vorderen Bereich des Maschinengehäuses 10, aus dem das freie Ende der Eingangswelle 11 heraus ragt, axial überdecken und der Bereich des Maschinengehäuses 10 im Innenraum dieser Bauteile liegt. Dabei bildet die Längsachse der Eingangswelle 11 das Koordinatensystem, zu dem diese Bauteile ausgerichtet sind. Der Rotor 6 ist ausschliesslich auf der Eingangswelle 11 gelagert und steht in keinerlei mechanischer Verbindung mit den übrigen Bauelementen des Elektromotors. Der Antrieb des Rotors 6 und somit der Eingangswelle 11 erfolgt in üblicher Weise durch das elektromagnetische Wechselfeld zwischen Stator 5 und Rotor 6.

Wie Figur 3 weiter zu entnehmen ist, zeichnet sich das System nach der Erfindung durch eine kompakte Bauweise aus, da die Bauteile des Elektromotors den vorderen Bereich der Arbeitsmaschine umschliessen. Über den hinteren freiliegenden Bereich kann die Arbeitsmaschine in einfacher Weise gewartet werden. Das Fehlen zusätzlicher Lagereinrichtungen für den Rotor führt zu einer einfachen Konstruktion mit wenigen Bauteilen und vermindert die Fehleranfälligkeit und den Verschleiss des Systems.

Im Betriebszustand des Systems liegt der Positionsgeber 15 dem Encoder 16 unmittelbar gegenüber, so dass die Drehposition, bzw. deren Änderung vom Encoder erfasst werden können. Diese Daten können in üblicher Weise zur Überwachung der Funktion des Systems aus Elektromotor und Arbeitsmaschine herangezogen werden.

**Bezugszeichen**

| | | | |
|---|---|---|---|
| 1 | Gehäusetopf | 20 | Bohrung |
| 2 | Gehäuseflansch | 21 | Schraubelement |
| 3 | Boden | 22 | Wicklungen |
| 4 | Umfangswand | 23 | Einsatzplatte |
| 5 | Stator | 24 | Stufe |
| 6 | Rotor | 25 | Einkerbung |
| 7 | Basis | 26 | innerer Flanschring |
| 8 | Umfangswand | 27 | äusserer Flanschring |
| 9 | Magnetelemente | 28 | Schraubmittel |
| 10 | Maschinengehäuse | 29 | Fortsatz |
| 11 | Eingangswelle | | |
| 12 | Durchführung | | |
| 13 | Einkerbung | | |
| 14 | Durchgang | | |
| 15 | Positionsgeber | | |
| 16 | Encoder | | |

## Patentansprüche

1. System aus einem Elektromotor und einer Arbeitsmaschine, bei dem der Elektromotor ein Motorgehäuse (1, 2) mit einem Stator (5) und einem innerhalb des Stators angeordneten Rotor (6) zum Antrieb der Arbeitsmaschine umfasst und
die Arbeitsmaschine ein Maschinengehäuse (10) und eine vom Rotor (6) des Elektromotors angetriebene Eingangswelle (11) umfasst,
wobei Motorgehäuse (1, 2) und Maschinengehäuse (10) miteinander verbunden sind, **dadurch gekennzeichnet, dass**
die Eingangswelle (11) im Maschinengehäuse (10) gelagert und ohne Lagerung am Elektromotor vorgesehen ist, derart dass ein freies Ende der Eingangswelle (11) aus dem Maschinengehäuse (10) hervorsteht und der Rotor (6) auf dem freien Ende der Eingangswelle (11) gelagert und ohne Lagerung am Elektromotor vorgesehen ist.

2. System nach Anspruch 1, **dadurch gekennzeichnet, dass** der Rotor (6) drehfest auf dem freien Ende der Eingangswelle (11) befestigt ist.

3. System nach Anspruch 1 oder 2, **dadurch gekennzeichnet, dass** das Maschinengehäuse (10) zumindest teilweise innerhalb des Motorgehäuses (1, 2) derart vorgesehen ist, dass eine Längsachse der Eingangswelle (11) einer zentralen Achse des Stators (5) entspricht.

4. System nach einem der vorhergehenden Ansprüche, **dadurch gekennzeichnet, dass** das Maschinengehäuse (10) am Motorgehäuse (1, 2) an nur einer Seite des Motorgehäuses (1, 2) befestigt ist.

5. System nach einem der vorhergehenden Ansprüche, **dadurch gekennzeichnet, dass** der Rotor (6) topfartig mit einer Umfangswand (8) ausgebildet ist, die das Maschinengehäuse (10) zumindest teilweise umgibt.

6. System nach einem der vorhergehenden Ansprüche, **dadurch gekennzeichnet, dass** das Motorgehäuse von einem Gehäusetopf (1) und einem Gehäuseflansch (2) gebildet ist, die durch eine lösbare Verbindung miteinander verbunden sind.

7. System nach Anspruch 6, **dadurch gekennzeichnet, dass** eine Umfangswand (4) des Gehäusetopfs (1) den Rotor (6) und zumindest teilweise das Maschinengehäuse (10) berührungslos umgibt.

8. System nach Anspruch 6 oder 7, **dadurch gekennzeichnet, dass** der Gehäuseflansch (2) einen zentralen Durchgang (12) aufweist, der zur Aufnahme des Maschinengehäuses (10) derart auf das Maschinengehäuse (10) abgestimmt ist, dass die Eingangswelle (11) relativ zum Stator (5) zentriert ist.

9. System nach einem der vorhergehenden Ansprüche, **dadurch gekennzeichnet, dass** Motorgehäuse (1, 2) und Maschinengehäuse (10) durch eine lösbare Verbindung (20, 21) miteinander verbunden sind.

10. System nach einem der vorhergehenden Ansprüche, **dadurch gekennzeichnet, dass** eine Positionserkennung zur Erkennung der Position des Rotors (6) vorgesehen ist, die einen Positionsgeber (15) am freien Ende der Eingangswelle (11) und einen Encoder (16) am Motorgehäuse (1, 2) umfasst.

11. System nach Anspruch 10, **dadurch gekennzeichnet, dass** der Positionsgeber (15) am Frontende der Eingangswelle (11) und der Encoder (16) im Zentrum des Gehäusetopfs (1) des Motorgehäuses vorgesehen ist.

12. System nach einem der vorhergehenden Ansprüche, **dadurch gekennzeichnet, dass** es derart modular aufgebaut ist, dass ein Elektromotor-Modul an unterschiedliche Arbeitsmaschinen-Module koppelbar ist, indem der Rotor (6) des Elektromotor des Elektromotor-Moduls auf einem freien Ende einer Eingangswelle (11) einer Arbeitsmaschine eines Arbeitsmaschinen-Moduls lagerbar ist.

13. System nach einem der vorhergehenden Ansprüche, **dadurch gekennzeichnet, dass** die Arbeitsmaschine als Pumpe ausgebildet ist, wobei Fluidanschlüsse der Pumpe am Maschinengehäuse (10) vorgesehen sind und nicht durch das Motorgehäuse (1, 2) verlaufen.

14. System nach einem der vorhergehenden Ansprüche, **dadurch gekennzeichnet, dass** der Elektromotor als bürstenloser DC-Motor oder als Reluktanzmotor ausgebildet ist.
